# EUROPEAN PATENT SPECIFICATION

(11) **EP 3 789 139 B1**
(45) Date of publication and mention of the grant of the patent: **15.03.2023**
(21) Application number: 20194892.4
(22) Date of filing: 07.09.2020
(51) Int. Cl.: B22F 10/364, B22F 10/37, B22F 12/90, B29C 64/393, B33Y 50/02, G01N 23/2206, G01N 23/2251, B22F 12/41, B33Y 30/00, B33Y 40/00

(54) **THREE-DIMENSIONAL ADDITIVE MANUFACTURING METHOD AND DEVICE WITH DETECTION OF DEFECTS WITH BACKSCATTERED ELECTRONS**
GENERATIVES FERTIGUNGSVERFAHREN UND GENERATIVE FERTIGUNGSVORRICHTUNG MIT ERKENNUNG VON DEFEKTEN MITTELS RÜCKSTREUELEKTRONEN
APPAREIL ET PROCÉDÉ POUR FABRICATION ADDITIVE AVEC DÉTECTION DES DÉFAUTS À L'AIDE DES ÉLECTRONS RÉTRODIFFUSÉS

(30) Priority: 09.09.2019 JP 2019163854
(43) Date of publication of application: 10.03.2021
(73) Proprietor: JEOL Ltd., Akishima, Tokyo 196-8558 (JP)
(72) Inventor: KITAMURA, Shinichi, Akishima, Tokyo 196-8558 (JP); TSUTAGAWA, Nari, Akishima, Tokyo 196-8558 (JP); MANABE, Hironobu, Akishima, Tokyo 196-8558 (JP)
(74) Representative: Boult Wade Tennant LLP

(56) References cited:
- WO-A1-2018/217646
- CN-A- 109 752 401
- US-A1- 2015 034 606

## Description

### BACKGROUND

### Technical Field

The present invention relates to a three-dimensional powder bed fusion additive manufacturing (PBF-AM) method and a three-dimensional PBF-AM apparatus for shaping an object by depositing layers of thinly spread powder samples on a layer-by-layer basis.

### Related Art

In recent years, a three-dimensional PBF-AM technology, by which a thinly spread powder sample is deposited layer on layer (hereinafter referred to as a "powder layer"), has been attracting attention and many types of three-dimensional PBF-AM technologies that differ in material of a powder sample and in shaping method have been developed (see JP 2019-7065 A, for example).

The three-dimensional PBF-AM apparatus disclosed in JP 2019-7065 A thinly spreads a powder sample on a flat base plate 5. Then, the three-dimensional PBF-AM apparatus causes the powder sample to melt and coagulate (solidify) by irradiating a portion to be shaped in the powder layer made up of a thinly spread powder sample with a laser beam or electron beam serving as a heat source and having a narrowed beam diameter.

A solidified area in the powder layer corresponds to a cross section of a three-dimensional shaped object represented by three-dimensional CAD data, sliced along a plane perpendicular to the stacking direction. The three-dimensional PBF-AM apparatus disclosed in JP 2019-7065 A repeats the process of moving the base plate in the height direction of the shaped object, spreading the powder sample, and causing a predetermined area of the powder layer to melt and solidify. As a result, a three-dimensional structural object in which thinly sliced objects are layered is shaped.
[Paten Literature 1] Japanese Patent Laid-Open No. 2019-7065
[Patent Literature 2] CN 109 752 401 A

### SUMMARY

However, the three-dimensional PBF-AM apparatus disclosed in JP 2019-7065 A proceeds with the shaping process irrespective of whether a shaping surface has any abnormality after a predetermined area of the powder layer is melted and solidified (after melting), with the result that a shaped object may be completed with an abnormality included. Furthermore, Patent Literature 2 discloses in-situ detection of defects using back-scattered electrons.

The present invention has been made in view of the above-described circumstances, and an object of the present invention is to provide a three-dimensional PBF-AM method and a three-dimensional PBF-AM apparatus that suppress the occurrence of a defect in a shaped object, increasing the accuracy of detection of irregularities.

According to the present invention, a method according to claim 1 and an apparatus according to claim 5 are provided.

According to one aspect of the present invention, a shaping surface is checked after a predetermined area of a powder layer is melted, and therefore the occurrence of a defect in the shaped object can be suppressed.

### BRIEF DESCRIPTION OF DRAWINGS

FIG. 1 is a cross-sectional view (part 1) illustrating an example configuration of a three-dimensional PBF-AM apparatus according to a first embodiment of the present invention;
FIG. 2 is a cross-sectional view (part 2) illustrating an example configuration of the three-dimensional PBF-AM apparatus according to the first embodiment of the present invention;
FIG. 3 is a diagram illustrating an example configuration of two-segmented detectors in the three-dimensional PBF-AM apparatus according to the first embodiment of the present invention;
FIG. 4 is a graph indicating changes in signals from the two-segmented detectors in the three-dimensional PBF-AM apparatus according to the first embodiment of the present invention;
FIG. 5 is a graph indicating changes in signals from the two-segmented detectors in the three-dimensional PBF-AM apparatus according to the first embodiment of the present invention and differences from the case where a shaping surface is inclined by 0 degrees;
FIG. 6 is a block diagram illustrating a control system in the three-dimensional PBF-AM apparatus according to the first embodiment of the present invention;
FIG. 7 is a cross-sectional view illustrating an example configuration of a three-dimensional PBF-AM apparatus according to a second embodiment of the present invention;
FIG. 8 is an explanatory diagram illustrating a configuration of a detection unit in the three-dimensional PBF-AM apparatus according to the second embodiment of the present invention;
FIG. 9 is a graph indicating A - B signals detected when the detection unit in the three-dimensional PBF-AM apparatus according to the second embodiment of the present invention scans in the X direction with an electron beam;
FIG. 10 is a graph indicating irregularity values with the slope of the graph shown in FIG. 9 removed; and
FIG. 11 is an explanatory diagram illustrating a modification of the three-dimensional PBF-AM apparatus according to the second embodiment of the present invention.

### DETAILED DESCRIPTION

Example embodiments of the present invention will now be described with reference to the accompanying drawings. Note that components common in the drawings are denoted by the same reference numerals and duplicate descriptions are omitted.

### <1. First embodiment> (Not falling within the scope of the invention)

### [Configuration of three-dimensional PBF-AM apparatus]

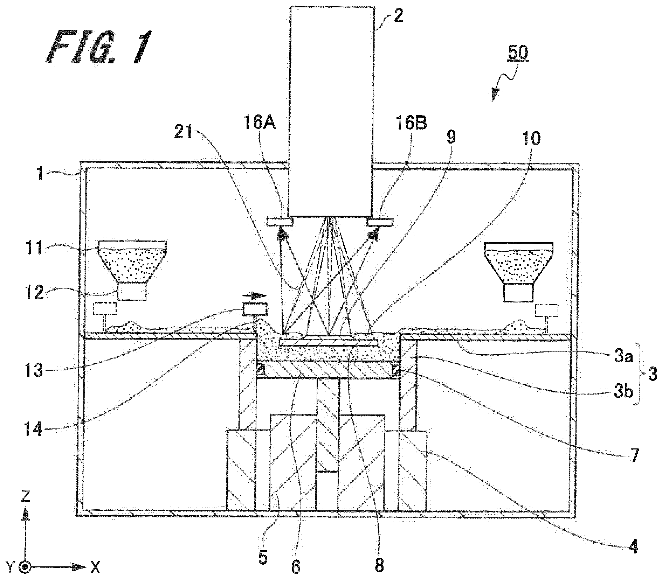

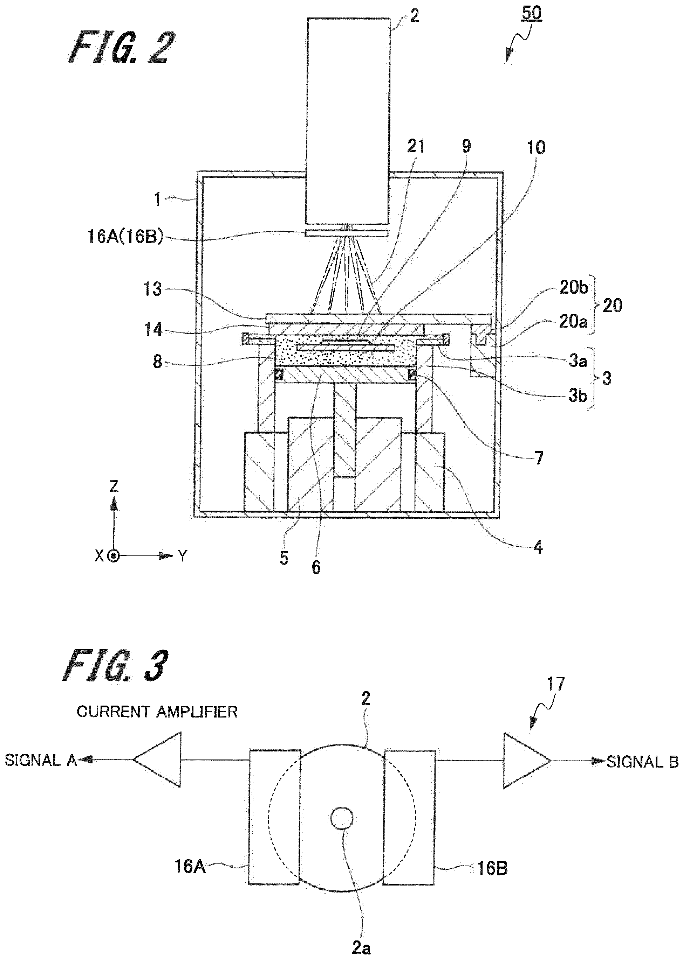

FIGS. 1 and 2 are cross-sectional views illustrating an example configuration of a three-dimensional PBF-AM apparatus according to a first embodiment.

In FIGS. 1 and 2, the moving direction (vertical direction) of a powder platform 6 of a three-dimensional PBF-AM apparatus 50 is denoted as the Z direction, a first direction perpendicular to the Z direction is denoted as the X direction, and a second direction perpendicular to the Z direction and to the X direction is denoted as the Y direction. That is, FIG. 1 is a cross-sectional view showing a cross section of a vacuum chamber 1 orthogonal to the Y direction, and FIG. 2 is a cross-sectional view showing a cross section of the vacuum chamber 1 orthogonal to the X direction.

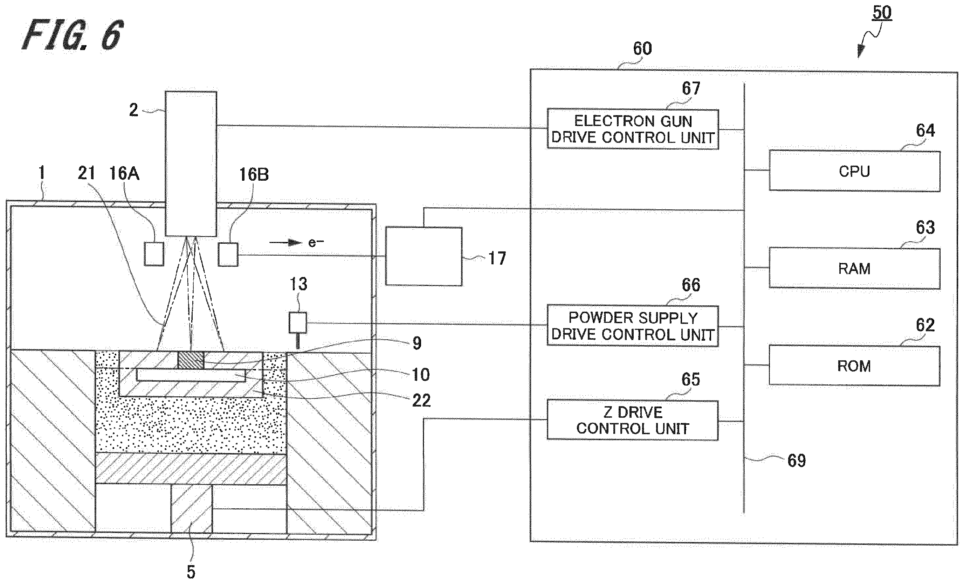

As illustrated in FIGS. 1 and 2, the three-dimensional PBF-AM apparatus 50 includes the vacuum chamber 1 and a shaping control device 60 (see FIG. 6) electrically connected to the vacuum chamber 1 as described later. An electron gun 2 (an example of a beam generation unit) is attached to an upper portion of the vacuum chamber 1. Inside the vacuum chamber 1, a build box 3 and a build box fixing unit 4 for fixing the build box 3 to the vacuum chamber 1 are provided. Alternatively, the build box 3 may be directly fixed to the vacuum chamber 1.

The build box 3 includes a table 3a to which a metal powder 8 is supplied and a tube 3b being continuous with the table 3a. The table 3a is formed in a rectangular plate shape whose both ends with respect to the X direction are in contact with the inner wall of the vacuum chamber 1, and a through hole is created in the center of the table 3a. The tube 3b is formed in a tubular shape along the perimeter of the through hole in the table 3a, and one end of the tube 3b is continuous with the lower surface of the table 3a. That is, in the case where the through hole in the table 3a is circular, the tube 3b is formed in a cylindrical shape that is set to have an inner diameter substantially equal to the diameter of the through hole.

The build box fixing unit 4 is formed in a tubular shape having a tube hole communicating with the tube hole of the tube 3b. The build box 3 (the tube 3b) is fixed to one end of the build box fixing unit 4 with respect to the axial direction, and the other end of the build box fixing unit 4 with respect to the axial direction is fixed to the bottom surface of the vacuum chamber 1. The tube 3b of the build box 3 together with the build box fixing unit 4 form a pit, which is a space for shaping a shaped object 9.

Inside the pit, the powder platform 6 and a Z drive mechanism 5 (an example of a drive unit) for moving the powder platform 6 along the Z direction are provided. The powder platform 6 is formed in a plate shape contoured in accordance with the shape of the tube hole of the tube 3b. That is, in the case where the tube hole of the tube 3b is circular, the powder platform 6 is formed into a circular disc. In addition, a seal member 7 is attached to the lateral perimeter surface of the powder platform 6.

The seal member 7 is interposed between the powder platform 6 and the inner perimeter surface of the tube 3b to seal the gap between the powder platform 6 and the inner perimeter surface of the tube 3b so that the powder (metal powder 8) is prevented from falling from the gap. The seal member 7 is slidably in contact with the inner perimeter surface of the tube 3b. As the Z drive mechanism 5, a rack and pinion or a ball screw, for example, can be employed. The atmosphere inside the vacuum chamber 1 is evacuated by a vacuum pump (not illustrated), and the inside of the vacuum chamber 1 is held with a vacuum.

Above the build box 3, two powder tanks 11, a dispenser 12 connected to the bottom of the powder tank 11, a squeegee arm 13, and a blade 14 attached to the squeegee arm 13 are provided. The powder tank 11, the dispenser 12, the squeegee arm 13, and the blade 14 represent an example of a powder supply unit according to the present invention.

The two powder tanks 11 face each other across the through hole (pit) in the table 3a. The two powder tanks 11 are each loaded with the metal powder 8. Note that the type of the metal powder loaded therein may be different between the two powder tanks 11. The dispenser 12 supplies a predetermined amount of the metal powder 8 onto the table 3a of the build box 3 from the metal powder 8 loaded in the powder tank 11.

As illustrated in FIG. 2, the squeegee arm 13 is movably supported by the arm drive mechanism 20 and moves along the table 3a between the table 3a and the dispenser 12. The arm drive mechanism 20 includes a rail (linear guide) 20a and a slider 20b movable on the rail 20a, the rail 20a being attached to the inner wall surface of the vacuum chamber 1. The slider 20b is caused to move on the rail 20a by a drive system (for example, a chain drive mechanism) (not illustrated). The squeegee arm 13 is fixed to the slider 20b.

The blade 14 is attached to a lower portion of the squeegee arm 13. The blade 14 flattens the metal powder 8 supplied onto the table 3a through reciprocating movement of the squeegee arm 13 between the two powder tanks 11. During the process, the metal powder 8 is spread over the powder platform 6 whose position have the same height as that of the metal powder 8 on the table 3a.

In addition, a base plate 10 is disposed in the metal powder 8 on the powder platform 6. The base plate 10 is a base on which the shaped object 9 is to be formed through layering. Note that, when the base plate 10 is heated during shaping, the metal powder 8 serves as a heat insulating layer to inhibit the heat from transferring from the base plate 10 to the build box 3 and to the powder platform 6.

Below the electron gun 2, two-segmented detectors 16A and 16B (an example of the detection unit) are disposed. The two-segmented detectors 16A and 16B are fixed at positions where the detectors do not interfere with the squeegee arm 13.

FIG. 3 is a diagram illustrating an example configuration of the two-segmented detectors 16A and 16B in the three-dimensional PBF-AM apparatus 50.

As illustrated in FIG. 3, the two-segmented detectors 16A and 16B face each other in the X direction across an electron beam emission port 2a in the electron gun 2. The distance between the centers of the two-segmented detectors 16A and 16B is set to be equal to or longer than the length of at least an area to be scanned with an electron beam (substantially the same as the area of the base plate 10).

In the present embodiment, to check an observed surface (for example, a shaping surface of the shaped object 9), an area slightly smaller than the base plate 10 is scanned with a precisely focused electron beam to collect backscattered electron images. The electron beam is generated with an emission current being low and enough to detect a backscattered electron (for example, about 1 mA). Note that the focus may be changed by using a preset method by which shaping recipe data is stored in advance or by using an autofocus function that is used in an electron microscope and the like and involves collecting backscattered electron images a plurality of times.

Current amplifiers 17 are respectively connected to the two-segmented detectors 16A and 16B, and a signal A and a signal B, which are outputs from the respective current amplifiers 17, are transmitted to the shaping control device 60 (see FIG. 6). The shaping control device 60 (CPU 64) acquires backscattered electron image (intensity) signals from the calculation result of A - B or (A - B)/(A + B) .

That is, since a backscattered electron in the specular reflection direction has a greater intensity, in the case where an observed surface (for example, a shaping surface) has irregularities, a signal difference dependent on the inclination angle of the surface of irregularities is caused between the backscattered electrons incident on the two-segmented detectors 16A and 16B. Therefore, from the result of calculating A - B or (A - B)/(A + B), information corresponding to irregularities can be imaged (a backscattered electron image can be obtained). The shaping control device 60 determines that irregularities have been created on a shaping surface if the height of a concave or convex portion exceeds a predetermined threshold.

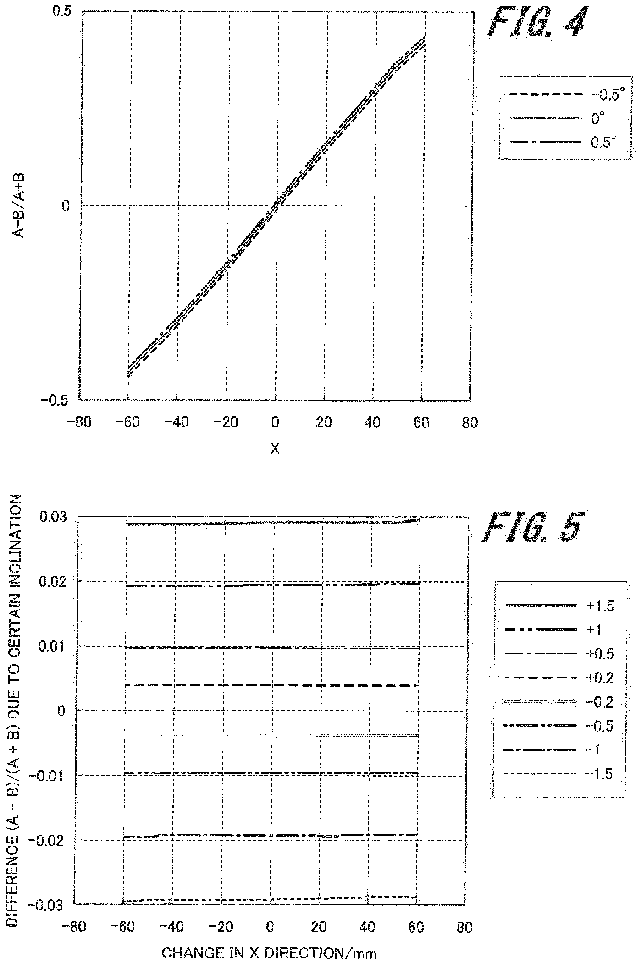

FIG. 4 is a graph indicating changes in, for example, (A - B)/(A + B) signals at points on a shaping surface inclined 0° and ±0.5° in the case where the shaping surface is scanned with an electron beam in the X direction. FIG. 5 is a graph indicating a difference between each inclination angle and 0°.

As shown in FIGS. 4 and 5, information corresponding to changes in the angle of a shaping surface along the X direction can be obtained from the results of detection by the two-segmented detectors 16A and 16B. In order to convert signals detected by the two-segmented detectors 16A and 16B into an accurate concave-convex shape, it is necessary to integrate surface slopes at the individual points to obtain the concave-convex shape.

Furthermore, a more accurate concave-convex shape can be obtained by additionally performing similar detection in the Y direction (using four-segmented detectors). In the case of dividing "A - B" by "A + B", A - B can be less affected by fluctuations in a primary beam current or by changes in an image of emitted backscattered electrons depending on the condition of a shaping surface. In addition, in the case of dividing "A - B" by "A + B", the linearity of the change with respect to the beam scanning is improved as compared with A - B.

Examples of the detector may include a pn junction type semiconductor detector used in an electron microscope. In the three-dimensional PBF-AM apparatus based on an electron beam system, the irradiating electron beam currents are of the order of mA, and thus a backscattered electron may be directly detected as a current with a metal plate electrode. Using a current amplifier capable of applying a voltage of about -100 V to the detector makes it possible to avoid the influence of scattered electrons of about 100 eV.

FIG. 6 is a block diagram of the control system (shaping control device 60) for the three-dimensional PBF-AM apparatus.

The three-dimensional PBF-AM apparatus 50 includes the shaping control device 60, which is electrically connected to the vacuum chamber 1. The shaping control device 60 includes a read only memory (ROM) 62, a random access memory (RAM) 63, a central processing unit (CPU) 64, a Z drive control unit 65, a powder supply drive control unit 66, and an electron gun drive control unit 67.

The shaping control device 60 transmits and receives information in accordance with a predetermined format to and from the individual drive units in the three-dimensional PBF-AM apparatus 50 via a communication interface (not illustrated). For example, a serial interface is used as the communication interface.

The ROM 62 is a non-volatile storage unit that stores a shaping program to be executed by the CPU 64, parameters of the shaped object 9, and the like. The RAM 63 is a volatile storage unit that temporarily stores data and is used as a work area. Note that the shaping program and data including parameters of the shaped object 9 as stored in the ROM 62 may be stored in a non-volatile mass storage device.

The CPU 64 reads the shaping program stored in the ROM 62 into the RAM 63 to control the processing and operations of each unit in accordance with the shaping program. The CPU 64 is connected to the individual units via a system bus 69 so that data can be transmitted and/or received to/from the units. The CPU 64, the ROM 62, and the RAM 63 are examples of a control unit.

The Z drive control unit 65 controls operations of the Z drive mechanism 5 under the control of the CPU 64. The powder supply drive control unit 66 controls operations of the dispenser 12 and the squeegee arms 13 under the control of the CPU 64. The electron gun drive control unit 67 controls, under the control of the CPU 64, the intensity and the irradiation position of an electron beam emitted from the electron gun 2.

### [Three-dimensional PBF-AM process]

A basic three-dimensional PBF-AM process according to the present embodiment will now be described.

### <Base plate heating step>

The three-dimensional PBF-AM process begins with a base plate heating step.

In the base plate heating step, the electron gun drive control unit 67 (see FIG. 6) controls the electron gun 2 to irradiate the base plate 10 with the electron beam 21 so that the base plate 10 is heated.

Specifically, an area slightly smaller than the entire upper surface of the base plate 10 is irradiated with the electron beam 21 by scanning the area with the electron beam 21. Then, the base plate 10 is kept heated in advance to a temperature at which the metal powder 8 to be spread later is preliminarily sintered. In this step, the upper surface of the base plate 10 is irradiated and scanned with the electron beam 21 being not focused but defocused (having a larger beam diameter), thereby avoiding locally melting the base plate 10.

When the temperature of the base plate 10 has risen, the metal powder 8 around the base plate 10 is preliminarily sintered to become a preliminary sintered body.

### <Squeegeeing step>

Next, a squeegeeing step is performed in the three-dimensional PBF-AM process.

In the squeegeeing step, first, the Z drive control unit 65 (see FIG. 6) controls the Z drive mechanism 5 to descend the powder platform 6 so that the upper surface of the base plate 10 is positioned slightly lower (by one layer) than the upper surface of the table 3a.

Then, the powder supply drive control unit 66 (see FIG. 6) controls the dispenser 12 to supply a predetermined amount of the metal powder 8 from the powder tank 11 onto the table 3a. In addition, the powder supply drive control unit 66 controls the arm drive mechanism 20 to move the squeegee arm 13 along the upper surface of the table 3a. As a result, the metal powder 8 that is supplied onto the table 3a is flattened by the blade 14 and one layer of the metal powder 8 is spread over the base plate 10 to form a powder bed.

### <Preliminary sintering step>

Next, a preliminary sintering step is performed in the three-dimensional PBF-AM process.

In the preliminary sintering step, the metal powder 8 that has been spread in the squeegeeing step becomes the preliminary sintered body 22 (see FIG. 6) with the heat of the base plate 10 heated in the base plate heating step.

### <Powder heating step>

Next, a powder heating step is performed in the three-dimensional PBF-AM process.

In the powder heating step, the electron gun drive control unit 67 (see FIG. 6) controls the electron gun 2 to irradiate a surface of the preliminary sintered body 22 (see FIG. 6) on the base plate 10 with the electron beam 21 so that the surface of the preliminary sintered body 22 is heated. Specifically, as in the above-described base plate heating step, the surface of the preliminary sintered body 22 on the base plate 10 is irradiated with the electron beam 21 by scanning the surface with the electron beam 21 being defocused.

### <Powder bed checking step>

Next, a powder bed checking step is performed in the three-dimensional PBF-AM process.

In the powder bed checking step, the electron gun drive control unit 67 (see FIG. 6) controls the electron gun 2 to scan the powder bed with an emission current that is low and enough to detect a backscattered electron.

Then, backscattered electrons generated by scanning the powder bed are detected by the two-segmented detectors 16A and 16B, and the CPU 64 acquires a backscattered electron image.

Immediately after the powder heating step is finished, the powder bed in a normal state is fully covered with the powder because the powder has been squeegeed, and no bulk (melted) surface of the shaped object 9 is exposed. Therefore, no irregularity is created on the powder bed. In contrast, when, for example, a bulk (melted) surface of the shaped object 9 is exposed from the powder bed or a stepped shape is created between the shaped object 9 and its surroundings because of insufficient supply of the metal powder 8, the powder bed will have irregularities.

When it is confirmed from the acquired backscattered electron image that no irregularity is created on the powder bed (that is, the powder bed is fully covered with the powder), the CPU 64 determines that the powder bed is normal. When the CPU 64 determines that the powder bed is normal, the processing goes to the next main melting step.

On the other hand, when it is confirmed from the acquired backscattered electron image that irregularities are created on the powder bed, the CPU 64 determines that an abnormality has occurred in the powder bed. When the CPU 64 determines that an abnormality has occurred in the powder bed, the squeegeeing step is performed again, and then the powder heating step is performed again. That is, when the CPU 64 determines that an abnormality has occurred in the powder bed, the process of shaping the current layer is carried out again from the squeegeeing step.

Note that, when it is determined that an abnormality has occurred in the powder bed and the temperature of the powder bed is lower than a predetermined temperature, a process similar to the powder heating step is performed to heat the powder bed prior to returning to the squeegeeing step.

Alternatively, it may be determined whether an abnormality has occurred in the powder bed in the powder bed checking step by comparing a backscattered electron image acquired in the shaping surface checking step described later (a backscattered electron image before the squeegeeing step) with a backscattered electron image acquired in the powder bed checking step (a backscattered electron image after the squeegeeing step). For example, if there is no difference between backscattered electron images before and after the squeegeeing step (if the images are identical), which means that the powder bed is not fully covered with powder, the CPU 64 determines that an abnormality has occurred in the powder bed.

On the other hand, if there is a difference between backscattered electron images before and after the squeegeeing step, it is checked whether the difference between the two exists in an area including a shaping surface. Then, if the difference between the two exists in the entire area including a shaping surface, the CPU 64 determines that the powder bed is normal. On the other hand, if the difference between the two does not exist in the entire area including a shaping surface, which means that a shaping surface may be exposed from part of the powder bed, the CPU 64 determines that an abnormality has occurred in the powder bed.

### <Main melting step>

Next, a main melting step is performed in the three-dimensional PBF-AM process.

In the main melting step, the electron gun drive control unit 67 (see FIG. 6) controls the electron gun 2 to irradiate a surface of the preliminary sintered body 22 (see FIG. 6) on the base plate 10 with the electron beam 21 so as to melt a two-dimensional shape area, which is a single layer obtained by slicing the shaping model represented by the shaping program. In this step, the preliminary sintered body 22 is melted with the electron beam 21 being focused and with an increased current density. This melting step may be called a melt.

### <Shaping surface checking step>

Next, a shaping surface checking step is performed in the three-dimensional PBF-AM process.

In the shaping surface checking step, the electron gun drive control unit 67 (see FIG. 6) controls the electron gun 2 to scan the shaping surface with an emission current that is low and enough to detect a backscattered electron. Then, backscattered electrons generated by scanning the shaping surface are detected by the two-segmented detectors 16A and 16B, and the CPU 64 acquires a backscattered electron image.

The CPU 64 determines that irregularities have been created on the shaping surface if the height of a concave or convex portion exceeds a predetermined threshold. Furthermore, in accordance with the condition of the area of irregularities, the CPU 64 determines whether the area has been overmelted or has not been melted (including insufficient melting). For example, if the area formed with irregularities is relatively smooth, the CPU 64 determines that the area has been overmelted and has been coagulated with its melted surface waving. In contrast, if an unmelted powder remains in the area of irregularities that are relatively sharp-edged, the CPU 64 determines that the area has not been melted.

When the CPU 64 determines that irregularities are created on a shaping surface (that is, the shaping surface is not in a normal melted state) in the shaping surface checking step, the main melting step is performed again (this step is hereinafter referred to as a "re-melting step"). In this case, when the temperature of the shaping surface is lower than a certain temperature, a process similar to the powder heating step is performed to heat the shaping surface, and then the re-melting step is carried out.

In the re-melting step performed in the case of overmelting, the electron gun drive control unit 67 (see FIG. 6) controls the electron gun 2 to reduce the beam current or increase the scanning speed to melt the shaping surface. On the other hand, in the re-melting step performed in the case of unmelting, the shaping surface is melted by increasing the beam current or decreasing the scanning speed. Note that conditions for the re-melting step such as the beam current and scanning speed may be stored in the ROM 62 in advance as the shaping recipe data.

After the re-melting step, the shaping surface checking step is performed. Note that the re-melting step and the shaping surface checking step are repeated until the CPU 64 determines that no irregularity is created on the shaping surface (that is, the shaping surface is in a normal melted state) in the shaping surface checking step. Alternatively, when the number of times the shaping surface checking step is performed for shaping the current layer has reached a predetermined number, the CPU 64 may determine that an error related to the melting has occurred and the three-dimensional PBF-AM process may be stopped. After the CPU 64 determines that no irregularity is created on the shaping surface (that is, the shaping surface is in a normal melted state) in the shaping surface checking step, a subsequent heating step is performed as described below.

### <Subsequent heating step>

Next, a subsequent heating step is performed in the three-dimensional PBF-AM process.

In the subsequent heating step, the electron gun drive control unit 67 (see FIG. 6) controls the electron gun 2 to irradiate a surface of the shaped object 9 and a surface of the preliminary sintered body 22 (see FIG. 6) on the base plate 10 with the electron beam 21 so that the surface of the shaped object 9 and the surface of the preliminary sintered body 22 are heated. Specifically, as in the above-described base plate heating step, the surface of the shaped object 9 and the surface of the preliminary sintered body 22 are irradiated with the electron beam 21 by scanning the surfaces with the electron beam 21 being defocused.

After the subsequent heating step is finished, the processing returns to the squeegeeing step for the next layer to repeat the squeegeeing step, the preliminary sintering step, the powder heating step, the powder bed checking step, the main melting step, the shaping surface checking step, and the subsequent heating step. When the subsequent heating step for the last layer of the shaped object is finished, the three-dimensional PBF-AM process is ended. As a result, the main melted portions (melts) are stacked layer by layer to form the shaped object 9.

As described above, in the first embodiment, the powder bed is checked for irregularities after the powder heating step is finished, and if irregularities are found, it is determined that an abnormality has occurred in the powder bed. Then, the squeegeeing step and the powder heating step are performed again. Accordingly, the main melting step is allowed to be performed on the powder bed in a normal state. As a result, the occurrence of a defect in the shaped object 9 can be suppressed.

In addition, the shaping surface is checked for irregularities after the main melting step is finished, and if irregularities are found on the shaping surface, the re-melting step is performed. Thus, the processing is prevented from going to the next step in the state where an abnormality has occurred on the shaping surface. As a result, the occurrence of a defect in the shaped object 9 can be suppressed.

In the first embodiment described above, the two-segmented detectors 16A and 16B are used to detect irregularities on the powder bed and on the shaping surface. However, a shaped object on the powder bed (melting area) can be identified by using a single electron detector, as in the case of acquiring usual backscattered electron images.

The contrast obtained from backscattered electrons is dependent on the density (atomic number) of the observed object irradiated with an electron beam. That is, a substance having a higher density (higher atomic number) emits a larger number of backscattered electrons, and thus provides a brighter backscattered electron image. Accordingly, when a single electron detector is used, a shaped object (melted bulk) also looks brighter than a preliminary sintered body in a backscattered electron image obtained from the detection result. Therefore, the above-described powder bed checking step can still be performed in a configuration employing a single electron detector.

In addition, an unmelted metal powder portion (unmelted portion) remaining in the main melting area looks slightly darker than a melted shaped object, and thus an unmelted portion can be distinguished from a melted portion. Therefore, even in a configuration employing a single electron detector, it can be determined whether a shaping surface has not been melted in the above-described shaping surface checking step.

On the other hand, an overmelted shaped object (a melted bulk) is less likely to exhibit a contrast difference because such object is a completely melted bulk although having some undulating irregularities. Therefore, in a configuration employing a single electron detector, it is difficult to determine whether a shaping surface has been overmelted in the above-described shaping surface checking step.

### <2. Second embodiment> (According to the invention)

### [Configuration of three-dimensional PBF-AM apparatus]

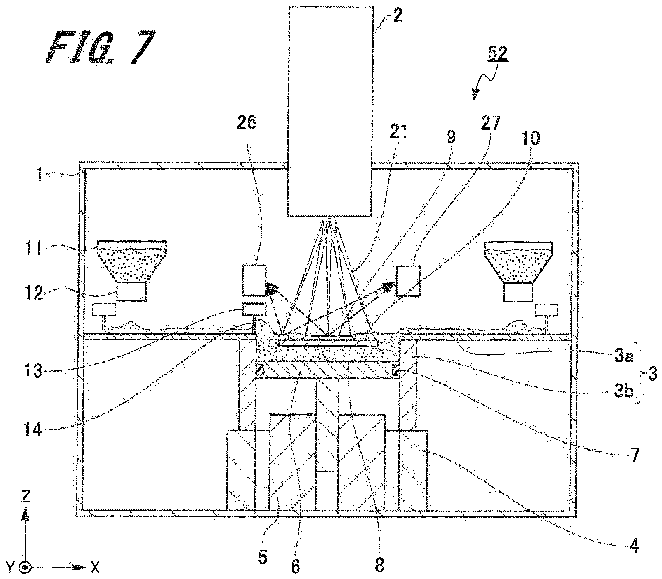

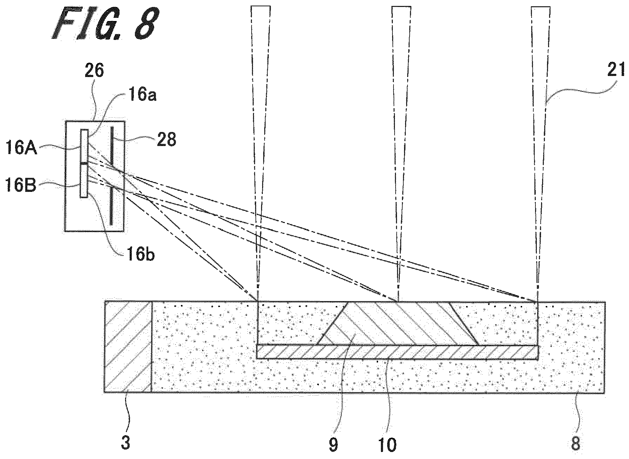

FIG. 7 is a cross-sectional view illustrating an example configuration of a three-dimensional PBF-AM apparatus according to a second embodiment of the present invention. FIG. 8 is an explanatory diagram illustrating a configuration of a detection unit in the three-dimensional PBF-AM apparatus according to the second embodiment of the present invention.

In FIG. 7, the moving direction (vertical direction) of the powder platform 6 of a three-dimensional PBF-AM apparatus 52 is denoted as the Z direction, a first direction perpendicular to the Z direction is denoted as the X direction, and a second direction perpendicular to the Z direction and to the X direction is denoted as the Y direction. That is, FIG. 7 is a cross-sectional view showing a cross section of the vacuum chamber 1 orthogonal to the Y direction.

The three-dimensional PBF-AM apparatus 52 according to the second embodiment is similar in configuration to the three-dimensional PBF-AM apparatus 50 according to the first embodiment described above; the difference is a detection unit 26 that detects a backscattered electron for checking if there are irregularities on a shaping surface. Thus, the configuration of the detection unit 26 according to the second embodiment is described here, while descriptions of the configurations in common with the first embodiment are omitted.

As illustrated in FIG. 7, the detection units 26 and 27 are disposed below the electron gun 2 in the vacuum chamber 1. The detection units 26 and 27 are fixed at positions where the detection units do not interfere with the squeegee arm 13 and face each other in the X direction across the electron beam emission port in the electron gun 2. The distance between the centers of the detection units 26 and 27 is set to be equal to or longer than the length of at least an area to be scanned with an electron beam (substantially the same as the area of the base plate 10).

As illustrated in FIG. 8, the detection unit 26 includes the two-segmented detectors 16A and 16B and an aperture member 28. Note that descriptions of the detection unit 27 are omitted because the detection unit 27 is configured in the same manner as in the detection unit 26. The two-segmented detectors 16A and 16B are adjacent to each other along the Z direction and have incident surfaces 16a and 16b on which backscattered electrons are to be incident. The incident surfaces 16a and 16b of the two-segmented detectors 16A and 16B are substantially orthogonal to the X direction and face toward the base plate 10.

The aperture member 28 faces the incident surfaces 16a and 16b of the two-segmented detectors 16A and 16B. The aperture member 28 limits the backscattered electrons to be incident on the incident surfaces 16a and 16b of the two-segmented detectors 16A and 16B. As a result, the focal depth becomes deeper, and thus irregularities on an observed surface (a shaping surface, for example) can be detected with higher accuracy.

As in the first embodiment, to check an observed surface (for example, a shaping surface of the shaped object 9), an area slightly smaller than the base plate 10 is scanned with a precisely focused electron beam to collect backscattered electron images in the second embodiment. The electron beam is generated with an emission current being low and enough to detect a backscattered electron (for example, about 1 mA).

Current amplifiers (not illustrated) are respectively connected to the two-segmented detectors 16A and 16B, and a signal A and a signal B, which are outputs from the respective current amplifiers, are transmitted to the shaping control device 60 (see FIG. 6). The shaping control device 60 (CPU 64) acquires backscattered electron image (intensity) signals from the calculation result of A - B or (A - B) / (A + B).

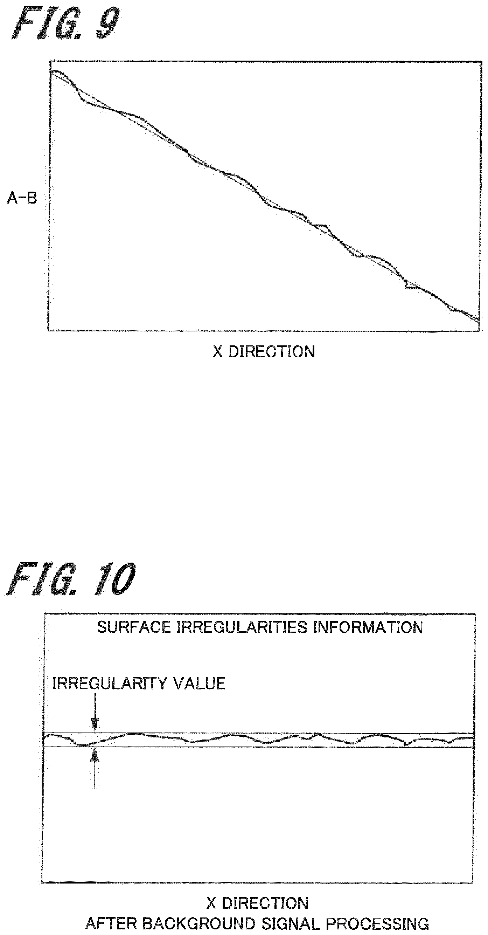

FIG. 9 is a graph indicating A - B signals corresponding to irradiation positions in the case where, for example, an area is scanned with an electron beam in the X-direction. FIG. 10 is a graph indicating irregularity values with the slope of the graph shown in FIG. 9 removed.

As shown in FIG. 9, the A - B signal changes in proportion to the distance along the X-direction, which is the scanning direction. Then, as shown in FIG. 10, an actual surface shape (irregularity values) of the observed surface (for example, a shaping surface of the shaped object 9) can be obtained by removing the inclination of the A - B signals through calculation. The shaping control device 60 (CPU 64) determines that irregularities have been created on a shaping surface if the irregularity value shown in FIG. 10 exceeds a predetermined threshold.

As the detector, a pn junction type semiconductor detector used in an electron microscope, or a metal plate electrode can be used. Using a current amplifier capable of applying a voltage of about -100 V to the detector makes it possible to avoid the influence of scattered electrons of about 100 eV.

### [Three-dimensional PBF-AM process]

The three-dimensional PBF-AM process according to the second embodiment is the same as the three-dimensional PBF-AM process according to the first embodiment described above. In the three-dimensional PBF-AM process according to the second embodiment, the detection units 26 and 27 are used to detect a backscattered electron in the powder bed checking step and in the shaping surface checking step.

### <Powder bed checking step>

In the powder bed checking step according to the second embodiment, the electron gun drive control unit 67 (see FIG. 6) controls the electron gun 2 to scan the powder bed with an emission current that is low and enough to detect a backscattered electron. Then, backscattered electrons generated by scanning the powder bed are detected by each of the detection units 26 and 27, and the CPU 64 acquires a backscattered electron image.

When it is confirmed from the acquired backscattered electron image that no irregularity is created on the powder bed (that is, the powder bed is fully covered with the powder), the CPU 64 determines that the powder bed is normal. When the CPU 64 determines that the powder bed is normal, the processing goes to the next main melting step.

On the other hand, when it is confirmed from the acquired backscattered electron image that irregularities are created on the powder bed, the CPU 64 determines that an abnormality has occurred in the powder bed. When the CPU 64 determines that an abnormality has occurred in the powder bed, the squeegeeing step is performed again, and then the powder heating step is performed again. Note that, when it is determined that an abnormality has occurred in the powder bed and the temperature of the powder bed is lower than a predetermined temperature, a process similar to the powder heating step is performed to heat the powder bed prior to returning to the squeegeeing step.

### <Shaping surface checking step>

In the shaping surface checking step according to the second embodiment, the electron gun drive control unit 67 (see FIG. 6) controls the electron gun 2 to scan the shaping surface with an emission current that is low and enough to detect a backscattered electron. Then, backscattered electrons generated by scanning the shaping surface are detected by each of the detection units 26 and 27, and the CPU 64 acquires a backscattered electron image.

The CPU 64 determines that irregularities have been created on the shaping surface if the height of a concave or convex portion exceeds a predetermined threshold. Furthermore, as in the first embodiment, in accordance with the condition of the area of irregularities, the CPU 64 determines whether the area has been overmelted or has not been melted (including insufficient melting). If the CPU 64 determines that irregularities have been created on a shaping surface during the shaping surface checking step, the re-melting step is performed. In this case, when the temperature of the shaping surface is lower than a certain temperature, a process similar to the powder heating step is performed to heat the shaping surface, and then the re-melting step is carried out.

In the re-melting step performed in the case of overmelting, the shaping surface is melted by decreasing the beam current or increasing the scanning speed. On the other hand, in the re-melting step performed in the case of unmelting, the shaping surface is melted by increasing the beam current or decreasing the scanning speed. Note that conditions for the re-melting step such as the beam current and scanning speed may be stored in the ROM 62 in advance as the shaping recipe data.

Thus, in the second embodiment, the powder bed is checked for irregularities after the powder heating step is finished, and if irregularities are found, it is determined that an abnormality has occurred in the powder bed, as in the first embodiment. Then, the squeegeeing step and the powder heating step are performed again. Accordingly, the main melting step is allowed to be performed on the powder bed in a normal state. As a result, the occurrence of a defect in the shaped object 9 can be suppressed.

In addition, the shaping surface is checked for irregularities after the main melting step is finished, and if irregularities are found on the shaping surface, the re-melting step is performed. Thus, the processing is prevented from going to the next step in the state where an abnormality has occurred on the shaping surface. As a result, the occurrence of a defect in the shaped object 9 can be suppressed. Furthermore, since the detection units 26 and 27 each include the aperture member 28 in the second embodiment, irregularities on the powder bed and on the shaping surface can be detected with high accuracy.

### [Modifications]

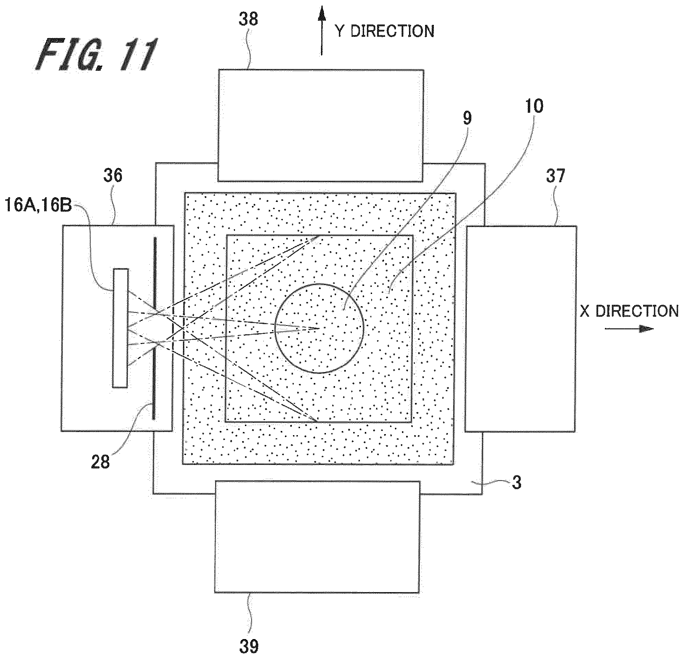

FIG. 11 is an explanatory diagram illustrating a modification of the three-dimensional PBF-AM apparatus 52 according to the second embodiment.

As illustrated in FIG. 11, the three-dimensional PBF-AM apparatus 52 according to the modification includes four detection units 36, 37, 38, and 39. The four detection units 36, 37, 38, and 39 are disposed below the electron gun 2 (see FIG. 7) in the vacuum chamber 1 and at positions where the detection units do not interfere with the squeegee arm 13.

The detection units 36 and 37 face each other in the X direction across the electron beam emission port in the electron gun 2. The distance between the centers of the detection units 36 and 37 is set to be equal to or longer than the length of at least an area to be scanned with an electron beam (substantially the same as the area of the base plate 10). Furthermore, the detection units 38 and 39 face each other in the Y direction across the electron beam emission port in the electron gun 2. The distance between the centers of the detection units 38 and 39 is set to be equal to or longer than the length of at least an area to be scanned with an electron beam (substantially the same as the area of the base plate 10).

The detection units 36, 37, 38, and 39 are in the same configuration as the configuration of the detection unit 26 (see FIG. 8) described above. Thus, descriptions of the configuration of the detection units 36, 37, 38, and 39 are omitted here. In this way, the detection units 36, 37, 38, and 39 are disposed along four directions around a shaping surface located in the center, which makes it possible to use the signal detected by the detector having higher sensitivity depending on the scanned area, thereby improving the accuracy of backscattered electron images.

Needless to say, the present invention is not limited to the embodiments described above, and various other modifications and applications can be taken without departing from the scope of the appended claims.

For example, the above example embodiments have been described in detail in order to explain the present invention in an easy-to-understand manner, but the present invention is not necessarily limited to the embodiments having all the configurations described above. Furthermore, part of the configuration of an example embodiment may be replaced with the configuration of another example embodiment, or the configuration of an example embodiment may be added to the configuration of another example embodiment. Moreover, the configuration of another embodiment may be added to, replaced with, or deleted from, part of the configuration of each example embodiment.

For example, in the first and second embodiments described above, the powder bed checking step is performed after the powder heating step. However, the powder bed checking is not limited to a time point after the powder heating step but may be performed at any timing. For example, the condition of the powder bed may be checked after the squeegeeing step to detect any defect caused on the squeegee arm 13 or the blade 14.

In addition, in the shaping surface checking step carried out on the three-dimensional PBF-AM apparatus according to the present invention, whether the powder bed surface including the shaped object 9 is raised may be detected. Then, if the powder bed surface including the shaped object 9 is raised, the CPU 64 determines that the powder bed is overheated. In this case, the time period for which a surface of the shaped object 9 or a surface of the preliminary sintered body 22 (see FIG. 6) is irradiated with the electron beam 21 is shortened in the subsequent heating step. As a result, the rise of the powder bed surface can be reduced or eliminated.

In the example described in the first and second embodiments above, the powder bed checking step and the shaping surface checking step are performed. However, on the three-dimensional PBF-AM apparatus according to the present invention, at least one of the powder bed checking step and the shaping surface checking step may be performed.

In addition, on the three-dimensional PBF-AM apparatus according to the present invention, it may be determined whether the backscattered electron image and the shaping data are consistent with each other regarding the dimensions of the shaped object, the shape (of a cross section) of the shaped object, and the X-direction and Y-direction coordinate positions. If the backscattered electron image and the shaping data are not consistent with each other, a distortion of the shaped object can be corrected by changing the dimensions of the melting area.

## Claims

1. A three-dimensional powder bed fusion additive manufacturing (PBF-AM) method comprising:
a squeegeeing step of supplying, by a powder supply unit, a powder sample onto a base plate (10) to stack powder layers;
a main melting step of irradiating, by a beam generation unit (2), a powder bed which is a top layer of the powder layers with an electron beam to melt a two-dimensional shape area, which is a single layer obtained by slicing a shaping model; and
a shaping surface checking step of detecting, by a detection unit (26), backscattered electron that is generated when the area melted in the main melting step is irradiated with an electron beam generated by the beam generation unit (2), and determining whether a melting state is normal or not based on the backscattered electron that has been detected, wherein
when it is determined that the melting state is not normal in the shaping surface checking step, a re-melting step of re-irradiating the area melted in the main melting step with the electron beam generated by the beam generation unit (2) is performed,
wherein
the detection unit (26) includes a plurality of detectors, and
in the shaping surface checking step, any irregularities on the area that has been melted are recognized from a difference between signals corresponding to backscattered electrons detected by the individual detectors, and it is determined that the melting state is not normal when the irregularities are created on the area that has been melted, **characterized in that** an aperture member (28) limits backscattered electrons incident on the detection unit (26).

2. The three-dimensional PBF-AM method according to claim 1, wherein
in the shaping surface checking step, when the irregularities are created on the area that has been melted, it is determined whether the area has not been melted or has been overmelted in accordance with a shape of the irregularities, and
in the re-melting step, an electron beam output or an electron beam scanning speed is controlled in accordance with a result of determination of whether the area has not been melted or has been overmelted in the shaping surface checking step.

3. The three-dimensional PBF-AM method according to claim 1, wherein
in the shaping surface checking step, lightness and darkness on the area that has been melted are recognized from a signal corresponding to a backscattered electron detected by the detector, it is determined whether the area that has been melted has an unmelted portion, and it is determined that the melting state is not normal when the area that has been melted has an unmelted portion.

4. The three-dimensional PBF-AM method according to claim 1, wherein
the area that has been melted is heated before the re-melting step is performed.

5. A three-dimensional powder bed fusion additive manufacturing (PBF-AM) apparatus (50) comprising:
a base plate (10);
a drive unit (5) that moves the base plate (10) along a vertical direction (Z);
a powder supply unit (11, 12, 13, 14) that supplies a powder sample onto the base plate (10) to stack powder layers;
a beam generation unit (2) that generates an electron beam with which the powder layers are irradiated;
a control unit (65) that controls the drive unit (5), the powder supply unit (11, 12, 13, 14), and the beam generation unit (2) to irradiate a powder bed which is a top layer of the powder layers with the electron beam to melt a two-dimensional shape area, which is a single layer obtained by slicing a shaping model, so that a three-dimensional shaped object (9) is shaped;
a detection unit (26) including a plurality of detectors that detects a backscattered electron generated when the two-dimensional shape area that has been melted is irradiated with an electron beam; wherein
the control unit (65)_ determines whether a melting state is normal or not based on a result of detection by the detection unit (26), and re-melts the two-dimensional shape area when it is determined that the melting state is not normal, wherein any irregularities on the area that has been melted are recognized from a difference between signals corresponding to backscattered electrons detected by the individual detectors, and it is determined that the melting state is not normal when the irregularities are created on the area that has been melted; **characterized by**
an aperture member (28) limiting backscattered electrons incident on the detection unit (26).

## Patentansprüche

1. Verfahren zur dreidimensionalen additiven Fertigung im Pulverbettschmelzverfahren (PBF-AM), das umfasst:
einen Rakelschritt, bei dem durch eine Pulverzufuhreinheit eine Pulverprobe auf eine Grundplatte (10) zugeführt wird, um Pulverschichten zu stapeln;
einen Hauptschmelzschritt, bei dem mittels einer Strahlerzeugungseinheit (2) ein Pulverbett, das eine oberste Schicht der Pulverschichten darstellt, mit einem Elektronenstrahl bestrahlt wird, um einen zweidimensionalen Formbereich zu schmelzen, bei dem es sich um eine einzelne durch In-Scheiben-Schneiden eines Formgebungsmodells erhaltene Schicht handelt; und
einen Formgebungsoberflächen-Prüfschritt des Erfassens, durch eine Erfassungseinheit (26), von rückgestreuten Elektronen, die erzeugt werden, wenn der im Hauptschmelzschritt geschmolzene Bereich mit einem von der Strahlerzeugungseinheit (2) erzeugten Elektronenstrahl bestrahlt wird, und des Bestimmens, ob ein Schmelzzustand normal ist oder nicht, auf der Grundlage der erfassten rückgestreuten Elektronen, wobei
wenn in dem Formgebungsoberflächen-Prüfschritt festgestellt wird, dass der Schmelzzustand nicht normal ist, ein erneuter Schmelzschritt des erneuten Bestrahlens des in dem Hauptschmelzschritt geschmolzenen Bereichs mit dem von der Strahlerzeugungseinheit (2) erzeugten Elektronenstrahl durchgeführt wird,
wobei die Detektionseinheit (26) eine Mehrzahl von Detektoren aufweist, und
in dem Formgebungsoberflächen-Prüfschritt jegliche Unregelmäßigkeiten in dem Bereich, der geschmolzen worden ist, aus einer Differenz zwischen von den einzelnen Detektoren detektierten, rückgestreuten Elektronen entsprechenden Signalen erkannt werden, und bestimmt wird, dass der Schmelzzustand nicht normal ist, wenn die Unregelmäßigkeiten in dem Bereich, der geschmolzen worden ist, erzeugt sind,
**dadurch gekennzeichnet, dass** ein Blendenelement (28) rückgestreute Elektronen, die auf die Detektionseinheit (26) auftreffen, begrenzt.

2. Dreidimensionales PBF-AM-Verfahren nach Anspruch 1, bei dem
in dem Formgebungsoberflächen-Prüfschritt, wenn die Unregelmäßigkeiten auf dem Bereich, der geschmolzen worden ist, erzeugt sind, anhand einer Form der Unregelmäßigkeiten bestimmt wird, ob der Bereich nicht geschmolzen worden ist oder überschmolzen worden ist, und
in dem Schritt des Wiederaufschmelzens eine Elektronenstrahlleistung oder eine Elektronenstrahlabtastgeschwindigkeit in Übereinstimmung mit einem Ergebnis der Bestimmung, ob der Bereich nicht geschmolzen oder übergeschmolzen wurde, aus dem Formgebungsoberflächen-Prüfschritt gesteuert wird.

3. Dreidimensionales PBF-AM-Verfahren nach Anspruch 1, bei dem
in dem Formgebungsoberflächen-Prüfschritt Helligkeit und Dunkelheit in dem Bereich, der geschmolzen worden ist, aus einem Signal erkannt werden, das einem von dem Detektor erfassten rückgestreuten Elektron entspricht,
bestimmt wird, ob der Bereich, der geschmolzen worden ist, einen ungeschmolzenen Abschnitt aufweist, und festgestellt wird, dass der Schmelzzustand nicht normal ist, wenn der Bereich, der geschmolzen worden ist, einen ungeschmolzenen Abschnitt aufweist.

4. Dreidimensionales PBF-AM-Verfahren nach Anspruch 1, bei dem der geschmolzene Bereich erwärmt wird, bevor der Schritt des Wiederaufschmelzens durchgeführt wird.

5. Vorrichtung (50) zur dreidimensionalen additiven Fertigung im Pulverbettschmelzverfahren (PBF-AM), umfassend:
eine Grundplatte (10);
eine Antriebseinheit (5), die die Grundplatte (10) entlang einer vertikalen Richtung (Z) bewegt;
eine Pulverzufuhreinheit (11, 12, 13, 14), die eine Pulverprobe auf die Grundplatte (10) zuführt, um Pulverschichten zu stapeln;
eine Strahlerzeugungseinheit (2), die einen Elektronenstrahl erzeugt, mit dem die Pulverschichten bestrahlt werden;
eine Steuereinheit (65), die die Antriebseinheit (5), die Pulverzufuhreinheit (11, 12, 13, 14) und die Strahlerzeugungseinheit (2) steuert, um ein Pulverbett, das eine oberste Schicht der Pulverschichten ist, mit dem Elektronenstrahl zu bestrahlen, um einen zweidimensionalen Formbereich zu schmelzen, bei dem es sich um eine einzelne durch In-Scheiben-Schneiden eines Formgebungsmodells erhaltene Schicht handelt, so dass ein dreidimensionales Formobjekt (9) geformt wird;
eine Erfassungseinheit (26) mit einer Mehrzahl von Detektoren, die ein rückgestreutes Elektron erfasst, das erzeugt wird, wenn der zweidimensionale Formbereich, der geschmolzen worden ist, mit einem Elektronenstrahl bestrahlt wird;
wobei die Steuereinheit (65) auf der Grundlage eines Ergebnisses der Erfassung durch die Erfassungseinheit (26) bestimmt, ob ein Schmelzzustand normal ist oder nicht, und den zweidimensionalen Formbereich erneut schmilzt, wenn bestimmt wird, dass der Schmelzzustand nicht normal ist, wobei jegliche Unregelmäßigkeiten in dem Bereich, der geschmolzen worden ist, aus einer Differenz zwischen von den einzelnen Detektoren erfassten, rückgestreuten Elektronen entsprechenden Signalen erkannt werden, und bestimmt wird, dass der Schmelzzustand nicht normal ist, wenn die Unregelmäßigkeiten in dem Bereich, der geschmolzen worden ist, erzeugt sind, **gekennzeichnet durch**
ein Blendenelement (28), das die auf die Erfassungseinheit (26) auftreffenden rückgestreuten Elektronen begrenzt.

## Revendications

1. Procédé de fabrication additive par fusion sur lit de poudre (PBF-AM) en trois dimensions comprenant :
une étape de raclage consistant à fournir, par une unité d'alimentation en poudre, un échantillon de poudre sur une plaque de base (10) pour empiler des couches de poudre ;
une étape de fusion principale consistant à exposer à un rayonnement, par une unité de génération de faisceau (2), un lit de poudre qui est une couche supérieure des couches de poudre avec un faisceau d'électrons pour faire fondre une zone de forme bidimensionnelle, qui est une couche unique obtenue en découpant un modèle de façonnage ; et
une étape de contrôle de surface de façonnage consistant à détecter, par une unité de détection (26), un électron rétrodiffusé qui est généré lorsque la zone fondue à l'étape de fusion principale est exposée à un rayonnement avec un faisceau d'électrons généré par l'unité de génération de faisceau (2), et à déterminer si un état de fusion est normal ou non sur la base de l'électron rétrodiffusé qui a été détecté, où
lorsqu'il est déterminé que l'état de fusion n'est pas normal à l'étape de contrôle de surface de façonnage, une étape de refusion consistant à ré-exposer à un rayonnement la zone fondue à l'étape de fusion principale avec le faisceau d'électrons généré par l'unité de génération de faisceau (2) est réalisée,
dans lequel
l'unité de détection (26) comporte une pluralité de détecteurs, et
à l'étape de contrôle de surface de façonnage, toute irrégularité sur la zone qui a été fondue est reconnue à partir d'une différence entre des signaux correspondant à des électrons rétrodiffusés détectés par les détecteurs individuels, et il est déterminé que l'état de fusion n'est pas normal lorsque les irrégularités sont créées sur la zone qui a été fondue, **caractérisé en ce que**
un élément d'ouverture (28) limite des électrons rétrodiffusés incidents sur l'unité de détection (26).

2. Procédé PBF-AM en trois dimensions selon la revendication 1, dans lequel
à l'étape de contrôle de surface de façonnage, lorsque les irrégularités sont créées sur la zone qui a été fondue, il est déterminé si la zone n'a pas été fondue ou a été surfondue conformément à une forme des irrégularités, et
à l'étape de refusion, une sortie de faisceau d'électrons ou une vitesse de balayage de faisceau d'électrons est commandée conformément à un résultat de détermination quant à savoir si la zone n'a pas été fondue ou a été surfondue à l'étape de contrôle de surface de façonnage.

3. Procédé PBF-AM en trois dimensions selon la revendication 1, dans lequel
à l'étape de contrôle de surface de façonnage, la luminosité et l'obscurité sur la zone qui a été fondue sont reconnues à partir d'un signal correspondant à un électron rétrodiffusé détecté par le détecteur, il est déterminé si la zone qui a été fondue a une partie non fondue, et il est déterminé que l'état de fusion n'est pas normal lorsque la zone qui a été fondue a une partie non fondue.

4. Procédé PBF-AM en trois dimensions selon la revendication 1, dans lequel
la zone qui a été fondue est chauffée avant que l'étape de refusion ne soit réalisée.

5. Appareil (50) de fabrication additive par fusion sur lit de poudre (PBF-AM) en trois dimensions comprenant :
une plaque de base (10) ;
une unité d'entraînement (5) qui déplace la plaque de base (10) le long d'une direction verticale (Z) ;
une unité d'alimentation en poudre (11, 12, 13, 14) qui fournit un échantillon de poudre sur la plaque de base (10) pour empiler des couches de poudre ;
une unité de génération de faisceau (2) qui génère un faisceau d'électrons avec lequel les couches de poudre sont exposées à un rayonnement ;
une unité de commande (65) qui commande l'unité d'entraînement (5), l'unité d'alimentation en poudre (11, 12, 13, 14) et l'unité de génération de faisceau (2) pour exposer à un rayonnement un lit de poudre qui est une couche supérieure des couches de poudre avec le faisceau d'électrons pour faire fondre une zone de forme bidimensionnelle, qui est une couche unique obtenue en découpant un modèle de façonnage, de sorte qu'un objet de forme tridimensionnelle (9) soit façonné ;
une unité de détection (26) comportant une pluralité de détecteurs qui détecte un électron rétrodiffusé généré lorsque la zone de forme bidimensionnelle qui a été fondue est exposée à un rayonnement avec un faisceau d'électrons ;
dans lequel
l'unité de commande (65) détermine si un état de fusion est normal ou non sur la base d'un résultat de détection par l'unité de détection (26), et fait fondre à nouveau la zone de forme bidimensionnelle lorsqu'il est déterminé que l'état de fusion n'est pas normal, où toute irrégularité sur la zone qui a été fondue est reconnue à partir d'une différence entre des signaux correspondant à des électrons rétrodiffusés détectés par les détecteurs individuels, et il est déterminé que l'état de fusion n'est pas normal lorsque les irrégularités sont créées sur la zone qui a été fondue ; **caractérisé par**
un élément d'ouverture (28) limitant des électrons rétrodiffusés incidents sur l'unité de détection (26).
